# NEW EUROPEAN PATENT SPECIFICATION

(11) **EP 1 289 827 B2**
(45) Date of publication and mention of the opposition decision: **22.04.2009**
(45) Mention of the grant of the patent: 04.05.2005
(21) Application number: 01934141.1
(22) Date of filing: 25.05.2001
(51) Int. Cl.: B62M 11/18

(54) **A MULTI-SPEED HUB GEAR**
MEHRGANGNABE
MOYEU A PLUSIEURS VITESSES

(30) Priority: 27.05.2000 GB 0012873
(43) Date of publication of application: 12.03.2003
(73) Proprietor: Sunrace Sturmey-Archer Inc., Tauyuan Country Taiwan, Province of China (TW)
(72) Inventor: RICKELS, Stephen, Terence, Woodthorpe, Nottingham NG5 4LA (GB)
(74) Representative: Downey, William Gerrard
(86) International application number: PCT/GB2001/002320
(87) International publication number: WO 2001/092094

(56) References cited:
- EP-A- 0 926 057
- EP-B1- 0 679 569
- GB-A- 190 523 232
- GB-A- 190 629 216
- GB-A- 190 629 217
- GB-A- 190 703 414
- GB-A- 190 711 315
- US-A- 4 858 494
- US-A- 4 926 713
- US-B2- 6 478 711
- PATENT ABSTRACTS OF JAPAN vol. 2000, no. 13, 5 February 2001 (2001-02-05) & JP 2000 283251 A (HONDA MOTOR CO LTD), 13 October 2000 (2000-10-13)

## Description

The present invention relates to a multi-speed hub gear particularly, but not exclusively, to such a hub gear for a cycle. US-A-4 926 713 shows a multi-speed hub gear according to the preamble of claim 1.

It is known in the art to provide three speed epicyclic gear hubs for bicycles by utilising planet gears engaged with a common gear ring and a sun gear fixed to the hub spindle. With this epicyclic system it is only possible to obtain direct drive plus one higher gear ratio and one lower gear ratio.

It is also known in the art to provide five and seven speed epicyclic gear hubs for bicycles by utilising compound planet gears engaged with a common gear ring and each cooperable with a respective sun gear selectively engageable therewith in drive transmission mode.

The planet cages of the aforesaid arrangements are connectable with the hub shell, so as to provide a drive transmission from the planet cage to the hub shell according to hub condition, by means of radially or axially movable pawls mounted in the planet cage and cooperable with ratchet teeth provided in a hub end cap. The gear ring is connectable with the hub shell through radial pawls.

It is also known from EP 0 686 113 and EP 0 762 968 in the name of the applicants for a sun gear to be axially fixed with respect to the spindle and to provide a gear selector key movable axially of the spindle for selective engagement with a respective one of the sun gears so as to non-rotatably secure that sun gear to the spindle.

It is also known from EP 0 926 057 A2 in the name of the applicants for a sun gear to be made non-rotatably secure to the hub spindle by using three balls disposed in respective holes in the hub spindle and a spool disposed for axial movement with respect to the spindle and operative, in one position, to displace the balls from a non-locking to a locking position in which the sun gear is non-rotatably locked with respect to the spindle.

With these sun gear locking means it is important that a sun gear is always locked to the spindle otherwise drive transmission will be lost. It is also important that only one sun gear is locked to the hub spindle at any one time, otherwise damage to the gear train could result. For this reason, the various sun gear selection means incorporate mechanisms for ensuring that at any time drive transmission is not lost or more than one sun pinion is locked to the spindle.

The use of compound planet gears has allowed commercial five and seven speed gear hubs to be made. It would be possible to extend the use of compound gears to make gear hubs with more gears than seven, however, they would probably be impractical in that the extra gear ratios may offer no commercial advantage and the overall mechanical strength of the gear train is likely to be lower.

US 4926713 discloses a power transmission mechanism in which a variety of both forward and reverse speed ratios are achieved by coupling two or more planetary gear sets and individual hydraulic clutches. These clutches determine which sun pinion or planet cage or ring gear is fixed and the input or output.

Since the clutches determine the path of the power transmission, the drive transmission will be lost once they fail. This is too complicated to achieve easy control. It also involves high cost and heavy weight.

The present invention overcomes these disadvantages. First of all, the drive transmission is never lost even when the means for selectively locking and unlocking the sun gear non-rotatably with respect to the spindle fails. There is always a positive drive. It is easy to control to achieve speed changing because it doesn't need to control the input or output of each module.

EP 0926 1057 is concerned only with a single gear module and is therefor not relevant.

The purpose of the present invention is to overcome these obstacles and allow a range of hub gears to be made commercially with different numbers of gear ratios and the possibility of more than seven gears.

According to the present invention there is provided a multi-speed hub gear according to claim 1.

In a preferred embodiment of the invention, the input drives the first module, the output from the first module drives the next module and so on. In operation by selectively locking or unlocking each module, the respective module may selectively provide either direct drive or a gear ratio. The output from the last module in the series of modules drives a hub shell advantageously by means of radially or axially movable pawls mounted in the gear module and cooperable with ratchet teeth provided in the hub shell assembly.

Each epicyclic gear module is arranged such that the planet cage is the driving or input component and the one way clutch is arranged so that direct drive transmission can be achieved when the sun pinion is unlocked in the rotational sense with respect to the hub spindle. When the sun gear of an epicyclic gear module is unlocked with respect to the spindle that epicyclic gear module will drive the next epicyclic gear module directly with no increase or decrease in gear ratio.

When the sun gear of an epicyclic gear module is locked with respect to the hub spindle the gear ring will rotate faster than the planet cage which will override the one way clutch which operates between the planet cage and the gear ring so that the output from that gear module will drive the next gear module at a faster rotational speed with respect to the input speed of the driving gear module.

As stated previously each gear module is capable of being selected to provide either direct drive or a gear ratio. With the gear modules arranged in series and coupled together, a gear hub assembly with direct drive can be achieved by unlocking the sun gear with respect to the hub spindle in every gear module. This ensures that in any. gear condition, drive transmission will not be lost.

When a sun gear in a gear module is locked then the output of this module will revolve at a different speed to the input, which will alter the final gear ratio for the complete hub. If the gear ratio of each gear module s different a gear hub with a number of different gear ratios can be achieved.

The action of unlocking and locking of the sun gear in a gear module effectively switches the gear module from direct drive mode to a gear ratio mode. As a gear module set in direct drive does not change the rotational speed of the next gear module in the series it can be considered to be switched off. When a gear module is set in a gear ratio mode it does affect the rotational speed of the next gear module in the series and it can be considered to be switched on.

This analogy allows the gear selection sequence to be displayed in a tabular form.

For example if a gear hub unit has two gear modules with different gear ratios (A and B) then this unit can be made to have direct drive plus three other ratios giving a four speed hub gear as follows:

| GEAR | GEAR MODULE 'A' | GEAR MODULE 'B' |
|---|---|---|
| 1 | OFF | OFF |
| 2 | ON | OFF |
| 3 | OFF | ON |
| 4 | ON | ON |

Increasing the number of gear modules to three makes it possible to construct an eight speed hub as follows:

| GEAR | GEAR MODULE | GEAR MODULE | GEAR MODULE |
|---|---|---|---|
| | 'A' | 'B' | 'C' |
| 1 | OFF | OFF | OFF |
| 2 | ON | OFF | OFF |
| 3 | OFF | ON | OFF |
| 4 | OFF | OFF | ON |
| 5 | ON | ON | OFF |
| 6 | ON | OFF | ON |
| 7 | OFF | ON | ON |
| 8 | ON | ON | ON |

With more gear modules it can be seen that many more gear ratios can be achieved. However where gear modules are combined together, the resultant gear ratio may or may not be of interest due to its similarity to other ratios in the range.

By careful selection of the gear ratio of each individual gear module in the range it is possible to produce hub gears with the desired number of gears and the desired step increase between the gears.

If the requirement was for eight gears with approximately even steps between the gears in the middle of the range with bigger steps at the extremes then such a gear could be constructed as follows:

| GEAR | GEAR MODULE 'A' RATIO=1.280 OR 1 | GEAR MODULE 'B' RATIO=1.45O OR 1 | GEAR MODULE 'C' RATIO=1.644 OR 1 | TOTAL RATIO | GEAR STEP |
|---|---|---|---|---|---|
| 1 | 1 | 1 | 1 | 1 | |
| 2 | 1.280 | 1 | 1 | 1.280 | +28% |
| 3 | 1 | 1.45 | 1 | 1.450 | +13% |
| 4 | 1 | 1 | 1.644 | 1.644 | +13% |
| 5 | 1.280 | 1.45 | 1 | 1.856 | +13% |
| 6 | 1.280 | 1 | 1.644 | 2.104 | +13% |
| 7 | 1 | 1.45 | 1.644 | 2.384 | +13% |
| 8 | 1.280 | 1.45 | 1.644 | 3.051 | +28% |

Therefore it is possible with the present invention to construct a hub gear suitable for use in a bicycle made up of a series of gear modules linked together in series where the gear selection is achieved by unlocking or locking the sun gears of the individual gear modules.

This is advantageous for the following reasons:
- All the gear selections are performed in the spindle assembly. There is no need to have a clutch as used in previous three, five and seven speed hubs known in the art.
- The hub gear will always have positive drive i.e. no neutral position.
- More than one sun pinion can be selected at any one time without damage occurring as this is a normal condition for the hub gear.
- Modular construction allows for easier manufacture and more common parts that can be used in different gear hubs. For example a four speed hub could be constructed using gear modules 'A' and 'C' from the eight speed example described earlier.

| GEAR | GEAR MODULE 'A' RATIO = 1.280 OR 1 | GEAR MODULE 'C' RATIO = 1.644 OR 1 | TOTAL RATIO | GEAR STEP |
|---|---|---|---|---|
| 1 | 1 | 1 | 1 | |
| 2 | 1.280 | 1 | 1.280 | + 28% |
| 3 | 1 | 1.644 | 1.644 | + 28% |
| 4 | 1.280 | 1.644 | 2.104 | + 28% |

The arrangement of the epicyclic gear modules described can be selected to have direct drive transmission or a higher gear.

The previous text has described the arrangement of the gear modules coupled together in series for the purpose of constructing a multi-speed bicycle hub but not the details of how the gear changing is achieved in practice.

In one embodiment of the present invention the sun gear of an epicyclic gear module is non-rotatably locked and unlocked with respect to the hub spindle using a ratchet pawl to non-rotatably lock the sun gear to the hub spindle in the same direction as the forward rotation of the hub gear assembly. If the sun gear is rotated in the reverse direction the ratchet pawl will be overridden and this will allow a hub gear of this type to be rotated backwards in a similar manner to a bicycle being wheeled backwards.

Each epicyclic gear module can be selected independently by a ratchet pawl gear selector. One end of this selector works to non-rotatably lock or unlock the sun gear to the hub spindle in the manner already described. The other end of the selector is located inside a cam plate which is in the form of a ring placed around the circumference of the hub spindle with a cam form on the inside and a spline form on the outside so that the cam plate can be rotated with respect to the hub spindle. The ratchet pawl gear selector is located in a suitable recess in the hub spindle and is resiliently urged into contact with the sun gear and the cam plate.

Each epicyclic module has its own ratchet pawl gear selector and cam plate. The ratchet pawl gear selectors will be different lengths to suit the side by side arrangement of the gear modules in series.

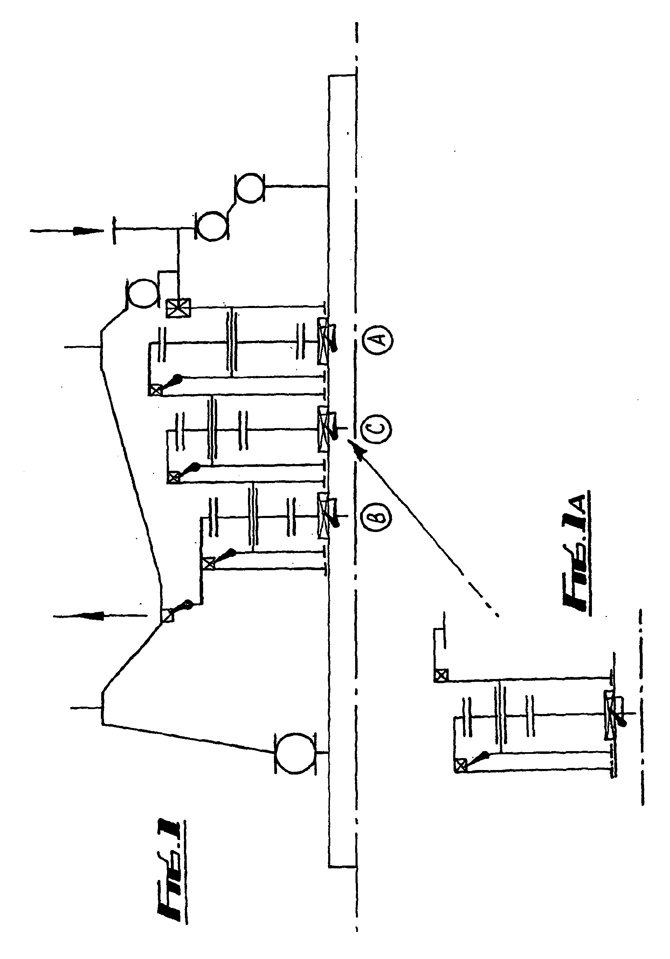

In order that the invention may be more fully understood, one embodiment thereof will now be described by way of example only with reference to the accompanying drawings in which:-
Figure 1 is a diagrammatic representation of a multi-speed hub gear comprising three epicyclic gear modules coupled together in series,
Figure 1 a diagrammatically shows a single epicyclic gear module, forming part of the hub gear of figure 1,
Figure 2 shows an isometric exploded view of a gear selector forming part of the hub gear of figure 1,
Figure 2a shows the ratchet pawl gear selector, hub spindle and ratchet pawl gear selector springs forming part of the system of figure 2 in an exploded isometric view in greater detail of part of the gear selector of figure 2,
Figure 3 shows, in section, a three module multi-speed hub gear corresponding to figure 1,
Figure 4 shows, in section, the hub gear of figure 3 with the gear transmission paths for two operative conditions.
Figure 5 shows in section the operation of three cam plates in one particular gear and the arrangement of three ratchet pawl gear selectors forming part of the hub gear of figure 3, and
Figure 6 shows in section a ratchet pawl gear selector operating to non-rotatably lock a sun gear and forming part of the hub gear of figure 3.

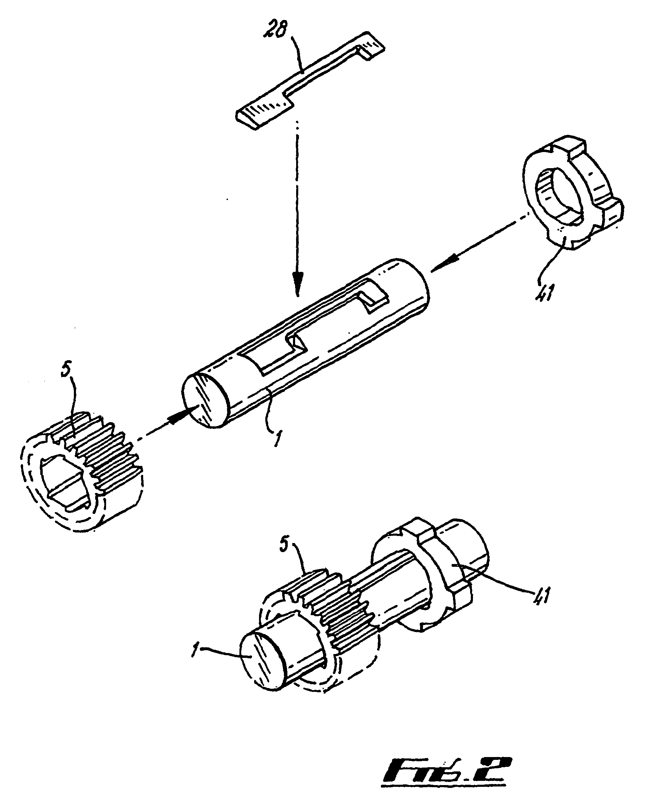

Referring to figures 1, 2 and 3 a multi- speed hub gear is shown with the capability of providing eight different gear ratios and is combined with a known cable operated drum brake assembly 42. The hub gear includes a hub spindle 1 which is provided with flats at at least one end of the spindle to allow the spindle to be non-rotatably fixed to the frame of a bicycle with the appropriate washers and nuts and three epicyclic gear modules A, B and C which will be described in more detail later. These are identified in order of increasing gear ratio.

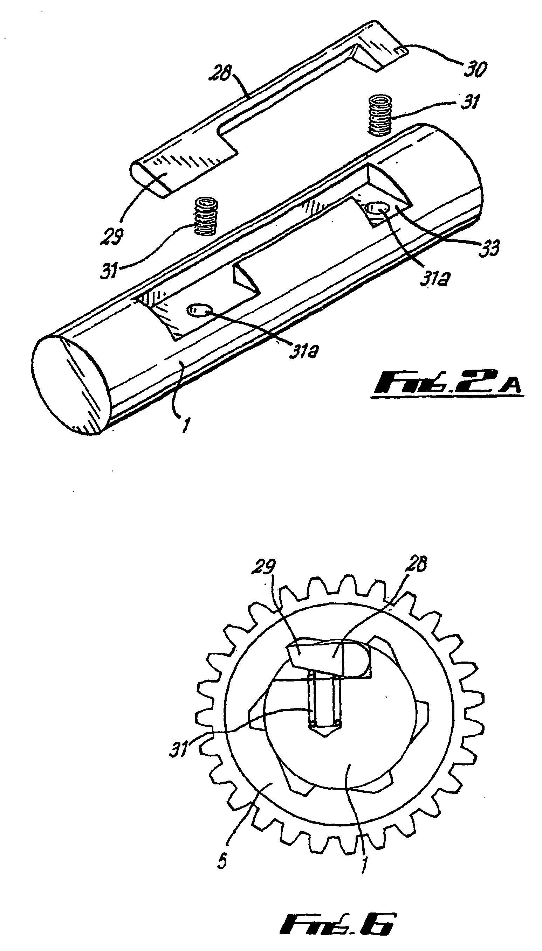

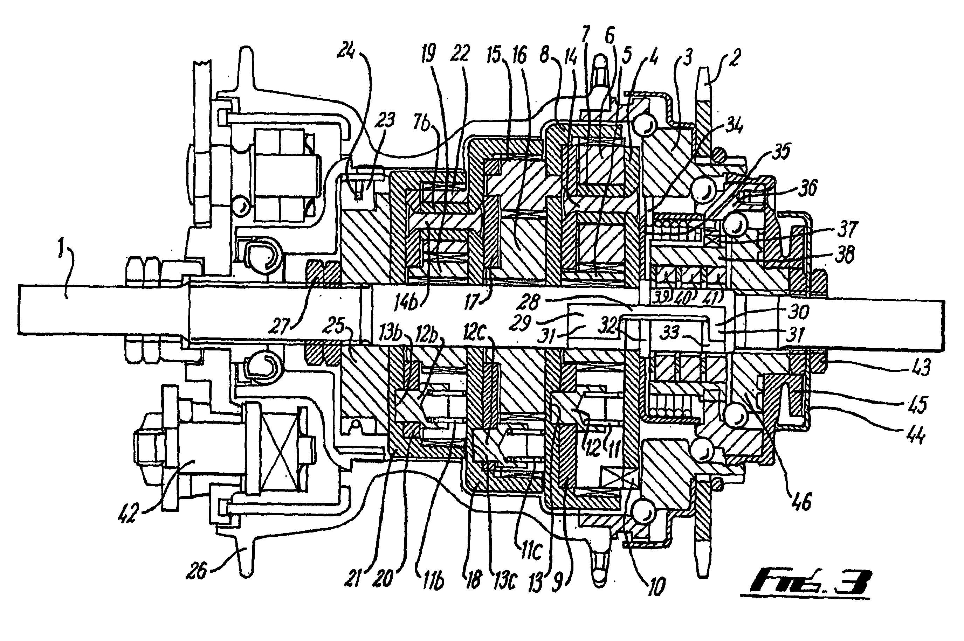

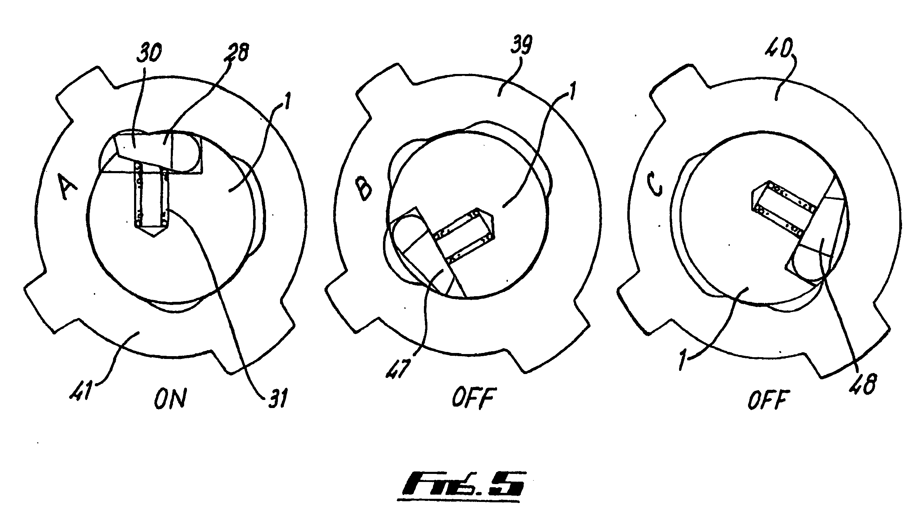

The three modules A, C and B respectively comprise three sun gears 5,16,19 which are capable of being non-rotatably locked and unlocked with respect to the hub spindle 1. Figure 3 further shows ratchet pawl gear selector 28 of module A which is one way of achieving this non-rotatable locking means for sun gear 5 of module A. The ratchet pawl gear selector 28 has two working ends providing a sun gear locking pawl 29 and a cam plate pawl 30 and seats in hub spindle recess 33. Sun gear locking pawl 29 works to non-rotatably lock and unlock the sun gear 5 of module A with respect to the hub spindle 1 in the manner shown in figure 6 where the sun gear locking pawl 29 is resiliently urged into contact with the internal ratchet form of sun gear 5 by ratchet pawl gear selector springs 31 which seat in holes 31 a. Cam plate pawl 30 works with the internal cam form on cam plate 41 to move the sun gear locking pawl 29 to the appropriate position to achieve the desired gear selection. Figure 5 shows cam plate 41 in a position that allows the cam plate pawl 30 to rotate in a clockwise direction under action of the selector springs 31.

In the example shown there are three ratchet pawl gear selectors 28, 47 and 48 fitted to the hub spindle 1. Only one ratchet pawl gear selector 28 is shown on figure 3. This works to non-rotatably lock sun gear 5 in module A to the hub spindle 1 under the action of cam plate 41. The other two ratchet pawl gear selectors are not shown in figure 3 but differ in length and are arranged around the circumference of the hub spindle as shown in figure 5. Ratchet pawl gear selector 47 works to non-rotatably lock sun gear 19 of module B to the hub spindle 1 under the action of cam plate 39. Ratchet pawl gear selector 48 works to non-rotatably lock sun gear 16 to the hub spindle 1 under the action of cam plate 40.

The distance and angle between the sun gear locking pawl 29 and the cam plate pawl 30 are fixed to each other as part of the ratchet pawl gear selector 28 of module A. This means that movement of the cam plate pawl 30 will directly move the sun gear pawl 29. Although the example shows two ratchet pawl gear selector springs 31 resiliently loading the sun gear locking pawl 29 and the cam plate pawl 30, it may only be necessary to resiliently load the sun gear locking pawl or the cam plate pawl as the pawls are integral parts of the selector 28. The pawls could be separate but connected and separately resiliently loaded.

In the example shown the three ratchet pawl gear selectors and the resilient means would be assembled to the hub spindle 1 prior to assembly of the gear train components.

Referring again to figure 3 the hub gear further includes four planet cage plates and three gear rings:
Planet cage plate input 4
Planet cage plate 9 of module A
Planet cage plate 20 of module B
Planet cage plate 17 of module C
Gear ring 8 of module A
Gear ring 21 of module B
Gear ring 18 of module C

In the example shown planet cage plate input 4 and planet cage plate 9 are fixed together at a set distance apart with rivets 14 the set distance being controlled by the planet pinion pins 7.

At the same time as the planet cage plates are fixed together, sun gear 5, planet pinions 6, planet cage pawls 12 and planet cage pawl springs 11 are arranged as indicated in figure 3 to create epicyclic gear module 'A'. To save space in the assembly of the gear module the planet pinion pin 7 acts as both the spindle for the planet pinion 6 and the spacer to hold the planet cage plates apart.

To fully complete the epicyclic gear train for module A gear ring 8 is required. In the example described, this also forms part of the next epicyclic gear module C.

The gear ring 8 has internal gear teeth that mesh with the planet pinions 6 and in the example has an axial ratchet face with unidirectional gear ring pockets 13 that act with the planet cage pawls 12 to give forward drive transmission or can be over-ridden depending on the gear selection.

The order in which the epicyclic gear modules appear in the series does not affect the final gear ratios. Epicyclic gear module 'C' is adjacent to epicyclic gear module 'A' because this arrangement allows a hub shell with a smaller envelope to be used. Module A is the largest module, module C the next largest and module B the smallest in terms of physical size.

Again referring to figure 3 the epicyclic gear module 'C' is constructed in a similar manner to epicyclic gear module 'A'.

The gear ring 8 and the planet cage plate 17 are fixed together at a set distance apart using rivets, and planet pinion pins, (both not shown) in the same manner as before.

As before, at the same time as the gear ring 8 and planet cage plate 17 are fastened together, sun gear 16, planet pinions 15, planet cage pawls 12c and planet cage pawl springs 11c are arranged as indicated in figure 3 to create the epicyclic gear module 'C'.

As described previously, to fully complete this epicyclic gear train of module C a gear ring is required. In the example described this forms part of the next epicyclic gear module B. In the construction of epicyclic gear module 'C' the planet pinion spacers, hold the planet cage plates apart but do not form part of the spindle for the planet pinions 15. In the example shown the planet pinion pin is an integral part of planet pinion 15.

The gear ring 18 has internal gear teeth that mesh with the planet pinions 15 and in the example has an axial ratchet face with unidirectional gear ring pockets 13c that act with the planet cage pawls 12c to give forward drive transmission or can be over-ridden depending on the gear selection .

Again referring to figure 3 the epicyclic gear module 'B' is constructed in a similar manner to epicyclic gear modules 'A' and 'C'.

The gear ring 18 and the planet cage plate 20 are fixed together at a set distance apart using rivets 14b and planet pinion pins 7b in the same manner as before.

As before at the same time as the gear ring 18 and planet cage plate 20 are fastened together, sun gear 19, planet pinions 22 planet cage pawls 12b and planet cage pawl springs 11b are arranged as indicated in figure 3 to create epicyclic gear module 'B'.

As described previously to fully complete this epicyclic gear train a gear ring is required. In the example described this forms the output part of the gear train. The gear ring 21 is rigidly attached to gear ring pawl carrier 25. This gear ring pawl carrier is coupled to the hub shell assembly with a unidirectional clutch. In the example shown this comprises at least one gear ring pawl 23 and a gear ring pawl spring 24.

The gear ring 8 has internal gear teeth that mesh with the planet pinions 6 and in the example has an axial ratchet face with unidirectional gear ring pockets 13b that act with the planet cage pawls 12b to give forward drive transmission or can be over-ridden depending on the gear selection.

Again referring to figure 3 all the described epicyclic gear modules A, C, B are assembled onto the hub spindle 1 in a side by side arrangement against a fixed hub spindle flange 32. In the example the epicyclic gear modules are then secured in place with two locknuts 27 set to provide a small axial clearance to allow the epicyclic gear modules to rotate freely on the hub spindle 1. With the locknuts 27 fitted the gear train part of the hub assembly is complete.

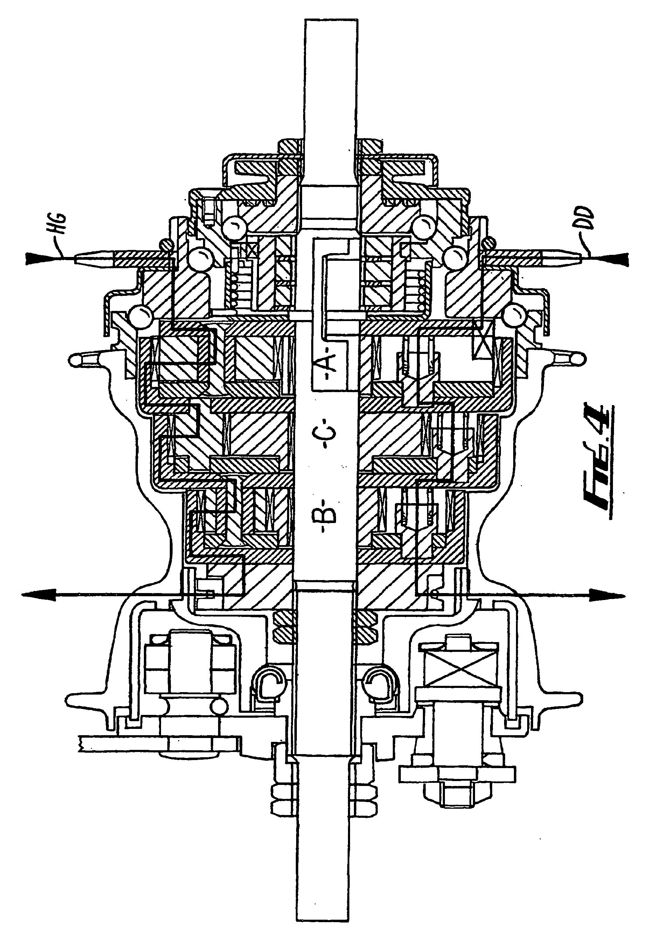

The drive transmission path through the multi-speed hub gear will now be explained with reference to figures 3 and 4. Figure 4 shows the drive paths through the hub for the highest gear condition and direct drive. These are respectively referenced HG and DD. For the highest gear all the epicyclic gear modules are "on" and, for the direct drive "off". The drive transmission path through the series of gear modules to the hub shell assembly 26 has been described previously in the text. The drive transmission path from the bicycle chain to the first epicyclic gear module 'A' can be described by referring to figure 3. Drive from the bicycle chain is transmitted into the multi-speed gear hub through a sprocket 2 which is securely fixed to a driver 3. The driver 3 is connected to the planet cage plate input 4 of epicyclic gear module 'A' with a driver/planet cage coupling 10. The driver/planet cage coupling 10 can be in the form of a 'dog clutch' and works to transmit the drive transmission from the driver 3 to the planet cage plate input 4.

The method of selecting the gear condition of each gear module will now be described with reference to figure 3. Gear changing at the hub is achieved by rotation of a cable drum 45. This cable drum is rotated in a series of steps by a control and cable combination in a similar manner to other types of gear hubs, for bicycles, currently available. The cable drum 45 is securely fixed to a gear change cone 36. This gear change cone 36 is supported on and can rotate freely on a support cone 46 with the aid of angular contact ball bearings in a manner known in the art for the construction of bicycle gear hubs. The gear change cone 36 also supports the driver 3 in a similar way on angular contact ball bearings again in the manner known in the art for the construction of bicycle gear hubs. By this arrangement of bearings the gear change cone 36 can freely rotate between the support cone 46 and the driver 3. The gear change cone 36 has a gear change cone/cam housing coupling 37 formed in the bore which is coupled to a cam plate housing 38 so that rotation of the gear change cone 36 can be directly transmitted to the cam plate housing 38. The cam plate housing 38 also has a spline form in its bore that allows cam plates 39, 40 and 41 to be assembled inside the cam plate housing 38 in required order to match the mating ratchet pawl gear selectors 28, 47 and 48. This spline form transmits rotation of the cam plate housing to the cam plates 39, 40 and 41. The cam plate housing 38 and the cam plates 39, 40 and 41 are free to rotate on the hub spindle and the axial position of these items is controlled by the hub spindle flange 32. Therefore in the manner described the rotation from the cable drum 45 is transmitted to the cam plates 39,40 and 41.

Figure 5 shows in section the operation of the cam plates 39, 40 and 41 in one particular gear. The internal cam forms of cam plates 39 and 40 are in such a position to hold the respective ratchet pawl gear selectors 47 and 48 down within the circumference of hub spindle 1. This makes the ratchet pawl gear selectors 47 and 48 inoperative allowing the respective sun gears 19 and 16 to rotate freely on the hub spindle 1. The internal cam form of cam plate 41 has allowed the ratchet pawl gear selector 28 to rotate in a clockwise direction under the action of ratchet pawl gear selector spring 31 so that the cam plate pawl is extended outwards from the centre of the hub spindle 1. This allows the sun pinion locking pawl 29 to lock the sun pinion 5 to the hub spindle 1 in the manner shown in figure 6.

Rotation of the cam plate housing 38 (see figure 3) will rotate all three cam plates together, which alter the relationship of the internal cam forms to the ratchet pawl gear selectors altering their operative condition. This describes how the rotation of the cable drum 45 can change the gear condition of the epicyclic gear modules under the action of a control and cable combination moving in a series of steps.

The control and cable combination can rotate the cable drum 45 in one direction only. To ensure that the cable drum 45 can return there is a torsion spring 34 which is secured on the hub spindle 1 with a torsion spring cup 35 and acts on the gear change cone 36 so that the torsion spring 34 is tensioned when the cable moves the cable drum 45 so that the tension stored in the torsion spring acts to return the cable drum when the tension in the cable is released. Thus two-way operation of the gear changing mechanism is achieved. There is provided an adjustment cover 44, which is secured to the hub spindle 1 with locknut 43 and this allows. the starting position of the control and cable combination to be adjusted to match the starting position of the cable drum.

The three module arrangement described above enables eight speeds to be provided for as already described.

It will be appreciated that the above embodiment has been described by way of example only and that many variations are possible without departing from the scope of the invention as defined in the appended claims.

## Claims

1. A multi-speed hub gear comprising a hub spindle (1), two or more modules (A, B and C) operatively connected in series on the hub spindle (1), each module including a sun gear (5, 16, 19), a planet cage (9, 20, 17), planet pinions (6, 15, 22) mounted in the cage and meshing with the sun gear, and a gear ring (8, 21, 18) meshing with the planet pinions, means (29) for independently selectively locking and unlocking the sun gear of each module non-rotatably with respect to the hub spindle in order to provide a plurality of gear ratios depending upon the number of modules and **characterised by** each module further comprising a one-way clutch coupling the planet cage (9, 20, 17) to the gear ring (8, 21, 18) such that there is always a positive drive.

2. A multi-speed hub gear as claimed in claim 1, in which an input to the hub gear drives a first module(A), the output from the first module driving the next module (C).

3. A multi-speed hub gear as claimed in claim 1 or 2, in which the means (29) for selectively locking and unlocking the sun gear (5) selectively provides either direct drive or a gear ratio in the corresponding module (A).

4. A multi-speed hub gear as claimed in claim 1, 2, or 3, in which the last module (C) in the series of modules drives a hub shell.

5. A multi-speed hub gear as claimed in claim 4, in which the hub shell is driven by means of radially or axially movable pawls (23) mounted in the gear module (A) and cooperable with ratchet teeth provided in the hub shell assembly.

6. A multi-speed hub gear as claimed in any preceding claim, in which each epicyclic gear module (A,B and C) is arranged such that the planet cage (9,20,17) is the driving or input component and the one-way clutch is arranged so that direct drive transmission can be achieved when the sun pinion (5) is unlocked in the rotational sense with respect to the hub spindle (1).

7. A multi-speed hub gear as claimed in claim 6, in which the first epicyclic gear module (A) drives the next epicyclic gear module (C) directly when the sun gear (5) is unlocked with respect to the spindle with no increase or decrease in gear ratio.

8. A multi-speed hub gear as claimed in any preceding claim, in which the gear ratio of each gear module (A,B and C) is the same or different to provide a number of different gear ratios.

9. A multi-speed hub gear as claimed in any preceding claim, in which the means for non-rotatably locking and unlocking the sun gear (5) with respect to the hub spindle (1) comprises a ratchet pawl (29) which is operative to lock in the same direction as the forward rotation of the hub gear assembly and to allow the hub gear to be rotated backwards.

10. A multi-speed hub gear as claimed in any preceding claim, in which each gear module (A,B,C) can be selected independently by a ratchet pawl gear selector (28, 47, 48)

11. A multi-speed hub gear as claimed in claim 10, in which one end of the selector (28) works to non-rotatably lock or unlock the sun gear (5) to the hub spindle (1).

12. A multi-speed hub gear as claimed in claim 11, in which the other end (30) of the selector (28) is located inside a cam plate (41) in the form of a ring placed around the circumference of the hub spindle (1) with a cam form on the inside and a spline form on the outside so that the cam plate (41) can be rotated with respect to the hub spindle (1).

13. A multi-speed hub gear as claimed in claim 12, in which the ratchet pawl gear selector (28) is located in the hub spindle (1) and is resiliently urged into contact with the sun gear (5) and the cam plate (41).

## Patentansprüche

1. Mehrgangnabengetriebe, aufweisend eine Nabenspindel (1), zwei oder mehrere Bauteile (A, B and C), die arbeitsmäßig in Reihe mit der Nabenspindel (1) verbunden sind, wobei jeder Modul ein Sonnenrad (5, 16, 19), einen Planetenkäfig (9, 20, 17), Planetenzahnräder (6, 16, 22), die im Käfig angeordnet sind und mit dem Sonnenrad kämmen, und einen Getriebering (8, 21, 18) aufweist, welches mit den Planetenzahnrädern kämmt, und ferner eine Einrichtung (29) zum unabhängigen wahlweisen Verriegeln und Entriegeln des Sonnenrads jedes Bauteils in Nichtdrehposition in Bezug auf die Nabenspindel, um eine Mehrzahl von Übersetzungsverhältnissen in Abhängigkeit von der Zahl der Module vorzusehen, **dadurch gekennzeichnet, dass** jedes Bauteil außerdem eine Einwegkupplung aufweist, die den Planetenkäfig (9, 20, 17) mit dem Getriebering (8, 21, 18) so kuppelt, dass immer ein Zwangsantrieb gegeben ist.

2. Mehrgangnabengetriebe nach Anspruch 1, in welchem ein Eingang zu dem Nabengetriebe einen ersten Modul (A) antreibt, wobei der Ausgang vom ersten Modul den nächsten Modul (C) antreibt.

3. Mehrgangnabengetriebe nach Anspruch 1 oder 2, in welchem die Einrichtung (29) zum wahlweisen Verriegeln und Entriegeln des Sonnenrads (5) selektiv entweder für einen Direktantrieb oder ein Übersetzungsverhältnis in dem entsprechenden Modul (A) sorgt.

4. Mehrgangnabengetriebe nach Anspruch 1, 2 oder 3, in welchem der letzte Modul (C) in der Reihe der Module eine Nabenschale antreibt.

5. Mehrgangnabengetriebe nach Anspruch 4, in welchem die Nabenschale mittels von radial oder axial beweglichen Klauen (23) angetrieben ist, die in dem Getriebemodul (A) montiert sind und mit Ratschenzahnen zusammenwirken, die in dem Nabenschalenaufbau vorgesehen sind.

6. Mehrgangnabengetriebe nach irgendeinem der vorangehenden Ansprüche, in welchem jeder epizyklische Getriebemodul (A, B and C) so angeordnet ist, dass der Planetenkäfig (9, 20, 17) die treibende oder die Eingangskomponente ist und die Einwegkupplung so ausgebildet ist, dass eine Direktantriebsübertragung erreicht wird, wenn der Sonnenzapfen (5) in Drehrichtung in Bezug auf die Nabenspindel (1) nicht verriegelt ist.

7. Mehrgangnabengetriebe nach Anspruch 6, in welchem der erste epizyklische Getriebemodul (A) den nächsten epizyklischen Getriebemodul (C) direkt antreibt, wenn das Sonnenrad (5) in Bezug auf die Spindel mit nicht erhöhtem oder verringertem Übersetzungsverhältnis entriegelt ist.

8. Mehrgangnabengetriebe nach irgendeinem der vorangehenden Ansprüche, in welchem das Übersetzungsverhältnis jedes Getriebemoduls (A, B and C) gleich oder unterschiedlich ist, um eine Anzahl von unterschiedlichen Übersetzungsverhältnissen zu bilden.

9. Mehrgangnabengetriebe nach irgendeinem der vorangehenden Ansprüche, in welchem die Einrichtung zur nicht drehweisen Verriegelung und Entriegelung des Sonnenrades (5) in Bezug auf die Nabenspindel (1) eine Ratschenklaue (29) aufweist, welche arbeitet, um in der gleichen Richtung wie in der Vorwärtsrichtung der Nabengetriebeanordnung zu verriegeln und um zu ermöglichen, dass das Nabengetriebe rückwärts gedreht wird.

10. Mehrgangnabengetriebe nach irgendeinem der vorangehenden Ansprüche, in welchem jeder Getriebemodul (A, B, C) unabhängig durch ein Ratschenklauenauswahlteil (28, 47, 48) auswählbar ist.

11. Mehrgangnabengetriebe nach Anspruch 10, in welchem das eine Ende des Auswahlteils (28) wirksam ist, um das Sonnenrad (5) mit der Nabenspindel (1) nicht drehbar zu verriegeln oder zu entriegeln.

12. Mehrgangnabengetriebe nach Anspruch 11, in welchem das andere Ende (30) des Auswahlteils (28) innerhalb einer Nockenplatte (41) in der Form eines Ringes und um den Umfang der Nabenspindel (1) herum und mit einer Nockenform an der Innenseite und mit einer Splintform an der Außenseite angeordnet ist, so dass die Nockenplatte (41) in Bezug auf die Nabenspindel (1) gedreht werden kann.

13. Mehrgangnabengetriebe nach Anspruch 12, in welchem das Ratschenklauen-Getriebewahlteil (28) in der Nabenspindel (1) angeordnet ist und nachgiebig in Kontakt mit dem Sonnenrad (5) der Nockenplatte (41) gedruckt wird.

## Revendications

1. Engrenage de moyeu à vitesses multiples, comprenant un fuseau (1) de moyeu, au moins deux modules (A, B et C) reliés en série en cours de fonctionnement sur le fuseau (1) de moyeu, chaque module comprenant un engrenage solaire (5, 16, 19), une cage planétaire (9, 20, 17), des pignons planétaires (6, 15, 22) montés dans la cage et venant en prise avec l'engrenage solaire, et une bague d'engrenage (8, 21, 18) venant en prise avec les pignons planétaires, **caractérisé par** un moyen (29) permettant de verrouiller et de déverrouiller indépendamment et de manière choisie l'engrenage solaire de chaque module de manière non rotative par rapport au fuseau de moyeu, afin de donner une pluralité de rapports d'engrenage en fonction du nombre de modules, et **caractérisé par le fait que** chaque module comprend en outre un embrayage simple qui couple la cage planétaire (9, 20, 17) à la bague d'engrenage (8, 21, 18), de sorte qu'il y ait toujours un entraînement direct.

2. Engrenage de moyeu à vitesses multiples selon la revendication 1, dans lequel une impulsion portée sur l'engrenage de moyeu entraîne un premier module (A), la sortie du premier module entraînant le module suivant (C).

3. Engrenage de moyeu à vitesses multiples selon la revendication 1 ou 2, dans lequel le moyen (29) permettant de verrouiller et de déverrouiller de manière sélective l'engrenage solaire (5) permet au choix soit un entraînement direct soit un rapport d'engrenage dans le module correspondant (A).

4. Engrenage de moyeu à vitesses multiples selon la revendication 1, 2 ou 3, dans lequel le dernier module (C) de la série de modules entraîne un carter de moyeu.

5. Engrenage de moyeu à vitesses multiples selon la revendication 4, dans lequel le carter de moyeu est entraîné au moyen de cliquets (23) mobiles radialement ou axialement, qui sont montés dans le module d'engrenage (A) et qui peuvent coopérer avec des dents de scie situées dans l'ensemble formant le carter du moyeu.

6. Engrenage de moyeu à vitesses multiples selon l'une quelconque des revendications précédentes, dans lequel chaque module d'engrenage épicycloïdal (A, B et C) est disposé de manière à ce que la cage planétaire (9, 20, 17) constitue le composant d'entraînement ou d'entrée et à ce que l'engrenage simple soit disposé de façon qu'on puisse obtenir la transmission à entraînement direct quand le pignon solaire (5) est déverrouillé dans le sens de rotation par rapport au fuseau (1) de moyeu.

7. Engrenage de moyeu à vitesses multiples selon la revendication 6, dans lequel le premier module d'engrenage épicycloïdal (A) entraîne directement le module suivant d'engrenage épicycloïdal (C) lorsque l'engrenage solaire (5) est déverrouillé par rapport au fuseau, sans augmentation ni diminution du rapport d'engrenage.

8. Engrenage de moyeu à vitesses multiples selon l'une quelconque des revendications précédentes, dans lequel le rapport d'engrenage de chaque module d'engrenage (A, B et C) est identique ou différent, afin d'obtenir un certain nombre de rapports d'engrenage différents.

9. Engrenage de moyeu à vitesses multiples selon l'une quelconque des revendications précédentes, dans lequel le moyen de verrouillage et de déverrouillage de manière non rotative de l'engrenage solaire (5) par rapport au fuseau (1) de moyeu comprend un doigt d'encliquetage (29) qui peut servir à verrouiller dans le même sens que la rotation en marche avant de l'ensemble formant l'engrenage de moyeu, et à permettre à l'engrenage de moyeu de tourner en marche arrière.

10. Engrenage de moyeu à vitesses multiples selon l'une quelconque des revendications précédentes, dans lequel on peut choisir indépendamment chaque module d'engrenage (A, B et C) à l'aide d'un sélecteur (28, 47, 48) d'engrenage à doigt d'encliquetage.

11. Engrenage de moyeu à vitesses multiples selon la revendication 10, dans lequel une extrémité du sélecteur (28) fonctionne de manière à verrouiller ou à déverrouiller de manière non rotative l'engrenage solaire (5) vis-à-vis du fuseau (1) de moyeu.

12. Engrenage de moyeu à vitesses multiples selon la revendication 11, dans lequel l'autre extrémité (30) du sélecteur (28) se trouve à l'intérieur d'un plateau-came (41) sous forme d'une bague placée autour de la circonférence du fuseau (1) de moyeu, avec une forme de came du côté intérieur et une forme de clavette du côté extérieur, si bien que le plateau-came (41) peut tourner par rapport au fuseau (1) de moyeu.

13. Engrenage de moyeu à vitesses multiples selon la revendication 12, dans lequel le sélecteur (28) d'engrenage à doigt d'encliquetage est situé dans le fuseau (1) de moyeu et poussé avec résilience en contact avec l'engrenage solaire (5) et avec le plateau-came (41).
